# EUROPÄISCHE PATENTSCHRIFT

(11) **EP 1 769 144 B1**
(45) Veröffentlichungstag und Bekanntmachung des Hinweises auf die Patenterteilung: **10.03.2010**
(21) Anmeldenummer: 05744982.9
(22) Anmeldetag: 13.05.2005
(51) Int. Cl.: F01P 7/16, F02B 29/04

(54) **KÜHLSYSTEM FÜR EIN FAHRZEUG**
COOLING SYSTEM FOR A VEHICLE
SYSTEME DE REFROIDISSEMENT POUR UN VEHICULE

(30) Priorität: 15.05.2004 DE 102004024289
(43) Veröffentlichungstag der Anmeldung: 04.04.2007
(73) Patentinhaber: Deere & Company, Moline, IL 61265-8098 (US)
(72) Erfinder: ESAU, Dierk, 68809 Neulussheim (DE); WERNER, Gerald, 68535 Edingen-Neckarhausen (DE); BERG, Alexander, 67125 Dannstadt-Schauernheim (DE)
(74) Vertreter: Magin, Ludwig Bernhard
(86) Internationale Anmeldenummer: PCT/EP2005/052207
(87) Internationale Veröffentlichungsnummer: WO 2005/111392

(56) Entgegenhaltungen:
- EP-A- 0 063 941
- EP-A- 1 342 892
- DE-A1- 19 854 544
- DE-C1- 4 114 704
- US-A- 3 232 044
- US-A- 4 236 492
- US-A- 5 215 044
- US-A1- 2003 029 167

## Beschreibung

Die vorliegende Erfindung betrifft ein Kühlsystem für eine Brennkraftmaschine eines Fahrzeugs, vorzugsweise für ein landwirtschaftliches oder industrielles Nutzfahrzeug, insbesondere für einen Traktor. Das Kühlsystem weist einen Hochtemperaturkreislauf und einen Niedrigtemperaturkreislauf auf. Der Hochtemperaturkreislauf ist zur Kühlung der Brennkraftmaschine vorgesehen und weist mindestens einen Kühler auf. Der Niedrigtemperaturkreislauf ist zur Kühlung eines Ladeluftkühlers vorgesehen und weist mindestens einen Kühler auf. Der Ladeluftkühler ist mindestens zweigeteilt oder zweistufig ausgebildet.

Ein derartiges Kühlsystem für eine aufgeladene Brennkraftmaschine eines Kraftfahrzeugs geht aus der DE 198 54 544 A1 hervor. Das Kühlsystem weist einen Hochtemperaturkreislauf zur Kühlung der Brennkraftmaschine mit einem Hochtemperaturrückkühler auf. Ein in einem Nebenzweig des Hochtemperaturkreislaufs befindlicher Hochtemperaturladeluftkühler dient in einer ersten Stufe zur Kühlung der von einem Lader zum Betrieb der Brennkraftmaschine gelieferten Ladeluft. Des weiteren ist ein Niedertemperaturkreislauf vorhanden, der einen Niedertemperaturrückkühler und einen dazu in Reihe geschalteten Niedertemperaturladeluftkühler zur Kühlung der Ladeluft in einer zweiten Stufe umfasst. Dem Niedertemperaturladeluftkühler ist in Strömungsrichtung des Kühlmittels ein Motoröl/Getriebeölwärmetauscher nachgeschaltet.

Ein vergleichbares Kühlsystem zur zweistufigen Kühlung der Ladeluft für eine Brennkraftmaschine eines Kraftfahrzeugs ist aus der DE 41 14 704 C1 bekannt. Der Aufbau entspricht grundsätzlich demjenigen des Kühlsystems gemäß DE 198 54 544 A1, wobei dem Niedertemperaturladeluftkühler getrennte Wärmetauscher für Motor- und Getriebeöl nachgeschaltet sind.

Die US 3 232 044 A offenbart ferner ein System zur Kühlung eines Ladeluftstroms eines Verbrennungsmotors, insbesondere eines Dieselmotors. Gemäß einer dargestellten Ausführungsform wird der Ladeluftstrom zweistufig gekühlt. Hierzu sind zwei getrennte Niedrigtemperaturkreisläufe mit jeweils eigenen Ladeluftkühlern in Gestalt entsprechender Wärmetauscher vorgesehen.

Aus der EP 1 342 892 A1 geht ein als Niedertemperaturkreislauf ausgebildeter Kühlmittelkreislauf zur Kühlung von Ladeluft einer Brennkraftmaschine bei einem Fahrzeug hervor. Der Kühlmittelkreislauf weist unter anderem eine Kühlmittelpumpe, einen Kühler sowie einen Kühlmittel/Ladeluft-Kühler auf, wobei das Kühlmittel die Komponenten des Kühlmittelkreislaufs in der vorstehend genannten Reihenfolge durchströmt. Insbesondere ist die Ladeluftkühlung zweistufig ausgeführt und umfasst einen ersten und einen zweiten Kühlmittel/Ladeluft-Kühler. Hierbei wird die Ladeluft zuerst in dem ersten Kühlmittel/LadeluftKühler und anschließend in dem zweiten Kühlmittel/LadeluftKühler abgekühlt, bevor diese der Brennkraftmaschine zugeführt wird. Die beiden Kühlmittel/Ladeluft-Kühler können eine bauliche Einheit bilden. Das Vorhandensein eines weiteren Kühlmittelkreislaufs, der zur Kühlung der Brennkraftmaschine als Hochtemperaturkreislauf ausgebildet ist, ergibt sich dabei implizit. Auf welche Weise ein im Fahrzeug üblicherweise vorhandener Ölkühler in das Kühlsystem eingebunden werden kann, bleibt offen.

Der vorliegenden Erfindung liegt daher die Aufgabe zugrunde, ein Kühlsystem der eingangs genannten Art derart weiterzubilden, dass dieses die Einbindung eines im Fahrzeug vorhandenen Ölkühlers vorsieht.

Diese Aufgabe wird erfindungsgemäß durch die Lehre der Patentanspruchs 1 gelöst. Weitere vorteilhafte Ausgestaltungen und Weiterbildungen der Erfindung gehen aus den Unteransprüchen hervor.

Erfindungsgemäß ist ein Kühlsystem der eingangs genannten Art dadurch gekennzeichnet, dass der Niedrigtemperaturkreislauf ferner zur Kühlung eines Ölkühlers vorgesehen ist, wobei das Kühlmittel des Niedrigtemperaturkreislaufs nacheinander den Kühler, einen (ersten) Teil des Ladeluftkühlers, den Ölkühler und einen weiteren (zweiten) Teil des Ladeluftkühlers durchströmt.

Somit ist vorgesehen, den Ladeluftkühler mindestens zweigeteilt oder zweistufig auszubilden, nämlich in eine Hochtemperatur- und in eine Niedrigtemperaturstufe. Eine mehrstufige, insbesondere dreistufige Unterteilung des Ladeluftkühlers ist ebenfalls denkbar. Hierdurch kann die Effizienz der Kühlung der Ladeluft erhöht werden, da die aus der Umgebung angesaugte und komprimierte Ladeluft zunächst von dem der Hochtemperaturstufe des Ladeluftkühlers entsprechenden Teil gekühlt werden kann. Mit dem der Niedrigtemperaturstufe des Ladeluftkühlers entsprechenden Teil kann die Ladeluft dann weiter heruntergekühlt werden, so dass eine insgesamt verbesserte Kühlleistung des Ladeluftkühlers erzielt wird.

Erfindungsgemäß wird das Kühlmittel des Niedrigtemperaturkreislaufs von einer Kühlmittelpumpe zu der Niedrigtemperaturstufe des Ladeluftkühlers gefördert. Von dort aus durchströmt das Kühlmittel den Ölkühler, die Hochtemperaturstufe des Ladeluftkühlers und den Kühler des Niedrigtemperaturkreislaufs, um anschließend zurück zur Kühlmittelpumpe zu gelangen. Der Kühler des Niedrigtemperaturkreislaufs kann beispielsweise einen Luft-Kühlmittel-Wärmetauscher aufweisen. Mit anderen Worten ist in Strömungsrichtung des Kühlmittels des Niedrigtemperaturkreislaufs dem Kühler ein als Hochtemperaturstufe ausgebildeter (erster) Teil des Ladeluftkühlers, der Ölkühler und ein als Niedrigtemperaturstufe ausgebildeter weiterer (zweiter) Teil des Ladeluftkühlers nachgeordnet. Folglich ist der zweigeteilt oder zweistufig ausgeführte Ladeluftkühler ein und demselben Kühlkreislauf zugeordnet, nämlich dem Niedrigtemperaturkreislauf.

Dementsprechend kann der Niedrigtemperaturkreislauf dazu verwendet werden, die von der Niedrigtemperaturstufe des Ladeluftkühlers an das Kühlmittel des Niedrigtemperaturkreislaufs abgegebene Wärmeenergie zum Ölkühler zu transportieren, wodurch das den Ölkühler durchströmende Öl rascher erwärmt wird, so dass in vorteilhafter Weise die volle Betriebsbereitschaft des Fahrzeugs früher hergestellt ist. Da die Hochtemperaturstufe des Ladeluftkühlers dem Ölkühler nachgeschaltet ist, wird dieser nicht mit der gesamten abgeführten Abwärme des Ladeluftstroms beaufschlagt. Hierdurch wird die thermische Belastung des Ölkühlers verringert. Aufgrund der Verwendung des Niedrigtemperaturkreislaufs zur Kühlung des Ladeluftkühlers kann zudem der Hochtemperaturkreislauf entlastet werden, so dass dessen Kühlleistung zur Kühlung der Brennkraftmaschine gesteigert werden kann.

In einer bevorzugten Ausführungsform ist ein Mittel vorgesehen, mit welchem das im Niedrigtemperaturkreislauf beförderte Kühlmittel am Kühler des Niedrigtemperaturkreislaufs vorbeileitbar ist, so dass im Niedrigtemperaturkreislauf lediglich der Ladeluftkühler und der Ölkühler miteinander wirkverbunden sind. In diesem Fall kann die gesamte, von der Niedrigtemperaturstufe des-Ladeluftkühlers an das Kühlmittel des Niedrigtemperaturkreislaufs abgegebene Wärmeenergie zum Ölkühler transportiert werden.

Eine Wirkverbindung von Ladeluftkühler und Ölkühler ist beispielsweise in dem bereits erwähnten, nach einem Kaltstart des Fahrzeugs vorherrschenden Betriebszustand zweckmäßig. Insbesondere kann für die Dauer der Überbrückung des Kühlers eine gezielte Erhöhung der Öltemperatur erreicht werden, so dass in vorteilhafter Weise das vom Ölkühler gekühlte Öl auf einen vorgebbaren Temperaturwert geregelt werden kann.

Ganz allgemein kann ein Mittel vorgesehen sein, mit welchem das in einem Kühlkreislauf beförderte Kühlmittel am Kühler des Kühlkreislaufs vorbeileitbar ist. Das Mittel kann beispielsweise in Form eines Umschaltventils ausgeführt sein, welches das dem Kühler zuzuführende Kühlmittel an dem Kühler vorbeileitet, beispielsweise über eine Bypassleitung.

Insbesondere kann es sich bei dem Mittel zum Vorbeileiten des Kühlmittels um ein Umschaltventil handeln, welches beispielsweise in Form eines 4/2-Wegeventil ausgebildet und an einer Seite des Kühlers angeordnet ist, wobei an der betreffenden Seite das Kühlmittel sowohl in den Kühler ein- als auch aus diesem austritt.

Auf diese Weise kann verhindert werden, dass das Herstellen eines optimalen Betriebszustands des Fahrzeugs insbesondere nach einem Kaltstart längere Zeit in Anspruch nimmt. So ist beispielsweise die Temperatur des Getriebeöls erst nach einer vergleichsweise langen Betriebsphase des Fahrzeugs erreicht, so dass zumindest während der Aufwärmphase die hydraulischen Einheiten, Ventile und Kupplungen des Getriebes die vorgegebenen Reaktionszeiten nicht in vollem Maße erreichen.

In einer bevorzugten Ausführungsform sind die Kühlkreisläufe getrennt voneinander ausgebildet, so dass das den einen Kühlkreislauf durchströmende Kühlmittel nicht mit dem den anderen Kühlkreislauf durchströmenden Kühlmittel vermischt wird. Als Kühlmittel ist vorzugsweise eine Kühlmittelflüssigkeit vorgesehen, beispielsweise ein Gemisch, welches Wasser und Frostschutzmittel aufweisen kann. Die Kühlkreisläufe können durch ihre getrennte Anordnung unabhängig voneinander betrieben werden, was zu einer effizienten Kühlung des Fahrzeugs führt und eine dem jeweiligen Betriebszustand des Fahrzeugs angepasste Steuerung bzw. Regelung des Kühlsystems ermöglicht.

In diesem Fall ist es erforderlich, dass jeder Kühlkreislauf jeweils eine Kühlmittelpumpe aufweist. Dementsprechend kann ein bestimmter Kühlkreislauf aktiviert oder deaktiviert werden, indem die entsprechende Kühlmittelpumpe aktiviert oder deaktiviert wird. Hierbei bietet es sich an, die Kühlmittelpumpe elektrisch anzutreiben. Eine elektrisch angetriebene Kühlmittelpumpe kann räumlich entfernt zur Brennkraftmaschine angeordnet werden, da keine mechanische Kraftübertragung, beispielsweise durch Verwendung eines Keilriemenantriebs, erforderlich ist. Hierdurch lässt sich der zur Verfügung stehende Bauraum bei der Konzeption des Kühlsystems besser nutzen. Eine Aktivierung kann in diesem Fall durch Herstellen einer entsprechenden elektrischen Verbindung erfolgen, so dass keine mechanische Kupplung vorzusehen ist, welche die Kühlmittelpumpe beispielsweise von einem Keilriemenantrieb abkuppelt.

Letztendlich kann durch die getrennte Ausbildung der Kühlmittelkreisläufe eine effiziente und an den jeweiligen Betriebszustand des Fahrzeugs angepasste Kühlung erfolgen, die auch auf rasche Temperaturschwankungen der zu kühlenden Aggregate des Fahrzeugs zu reagieren vermag. Es sind jedoch auch Kühlsystemkonfigurationen denkbar, bei denen lediglich eine einzelne Kühlmittelpumpe vorgesehen ist, die getrennte Pumpkammern aufweist, mit denen das Kühlmittel der beiden getrennten Kühlkreisläufe zeitgleich gefördert werden kann.

Einer der Kühler kann einen Luft-Kühlmittel-Wärmetauscher aufweisen, welcher vorzugsweise von aus der Umgebung kommender Luft durchströmbar ist. Insoweit handelt es sich um einen herkömmlichen Luft-Kühlmittel-Wärmetauscher, der die ihm zugeführte Wärmeenergie des Kühlmittels zumindest teilweise an den hindurchtretenden Luftstrom abgibt.

Insbesondere während der Aufwärmphase der Brennkraftmaschine des Fahrzeugs kann der Ölkühler ausschließlich mit dem Hochtemperaturkreislauf verbindbar sein. Dies betrifft vor allem Ölkühler, die für die Kühlung des Getriebeöls zuständig sind, da insbesondere hydraulische Einheiten, Ventile und Kupplungen die vorgegebenen Reaktionszeiten nur dann erreichen, wenn das Getriebeöl seine optimale Betriebstemperatur aufweist. Vorzugsweise ist in diesem Betriebszustand der Kühler des Hochtemperaturkreislaufs vom Hochtemperaturkreislauf abtrennbar, so dass das seine optimale Betriebstemperatur noch nicht erreichte Kühlmittel rascher erwärmt wird. Somit wird in diesem Betriebszustand des Fahrzeugs der Hochtemperaturkreislauf zur Erwärmung der an ihm angeschlossenen Komponenten genutzt.

Die Leitungsverbindungen der Brennkraftmaschine, des Ölkühlers, des Ladeluftkühlers und/oder mindestens eines der Kühler der Kühlkreisläufe sind mittels mindestens eines Ventils verbindbar und/oder unterbrechbar. Das mindestens eine Ventil ist zweckmäßigerweise derart im Kühlsystem angeordnet, dass einerseits eine möglichst kurze Leitungsführung gewährleistet ist, andererseits jedoch eine flexible Zuordnung zumindest des Ladeluftkühlers und/oder des Ölkühlers zu den jeweiligen Kühlkreisläufen möglich ist.

Ein solches Ventil kann einen Thermostaten aufweisen und/oder elektrisch oder hydraulisch schaltbar ausgeführt sein. Hierbei werden elektrisch oder hydraulisch schaltbare Ventile bevorzugt.

In einer bevorzugten Ausführungsform ist zur Steuerung bzw. Regelung des Kühlsystems eine Steuereinrichtung und mindestens ein Temperatursensor zur Detektion der Temperatur des mindestens einen der Kühlkreisläufe durchströmenden Kühlmittels vorgesehen. So kann beispielsweise ein Temperatursensor an der Brennkraftmaschine angeordnet sein, und zwar dort, wo das Kühlmittel des Hochtemperaturkreislaufs die Brennkraftmaschine verlässt. Ein weiterer Temperatursensor kann beispielsweise am Ölkühler vorgesehen sein, wobei dieser Temperatursensor vorzugsweise unmittelbar die Öltemperatur detektiert. Weiterhin kann ein Temperatursensor am Ladeluftkühler angeordnet sein, der vorzugsweise ebenfalls unmittelbar die Temperatur der Ladeluft detektiert.

Der Temperatursensor erzeugt elektrische Signale, welche von der detektierten Temperatur abhängen. Diese Signale werden der Steuereinrichtung zugeleitet. Die Steuereinrichtung kann beispielsweise in Form eines Einplatinencomputers ausgeführt sein. Die Steuereinrichtung führt einen Vergleich der detektierten Temperatur mit einer vorgegebenen Temperatur oder einem vorgegebenen Temperaturbereich durch und steuert das mindestens eine Ventil und/oder mindestens eine der Kühlmittelpumpen entsprechend an, so dass ein vorgegebener Temperaturwert bzw. ein vorgegebener Temperaturbereich eingehalten wird.

Grundsätzlich sind die Kühler der Kühlkreisläufe an einer gemeinsamen Stelle des Fahrzeugs angeordnet. Insbesondere sind die Kühler der Kühlkreisläufe räumlich im Wesentlichen hintereinander angeordnet. Die Kühler werden ihrer Anordnungsreihenfolge entsprechend von Luft durchströmt, wobei die Luft vorzugsweise aus der Umgebung kommt.

Sollte kein ausreichender Bauraum im Fahrzeug zur Verfügung stehen, um die Kühler der Kühlkreisläufe an einer gemeinsamen Stelle des Fahrzeugs anzuordnen, so können diese auch an unterschiedlichen Stellen angeordnet sein. Die durch die Kühler hindurchtretenden Luftströme können in diesem Fall räumlich getrennt voneinander verlaufen.

In einer bevorzugten Ausführungsform ist den Kühlern jeweils ein Ventilator zugeordnet, wobei der Ventilator Luft durch den ihm zugeordneten Kühler bewegt, beispielsweise bläst oder saugt. Dies kommt insbesondere dann in Betracht, wenn die Kühler der Kühlkreisläufe an unterschiedlichen Stellen im Fahrzeug angeordnet sind. Vorzugsweise ist der Ventilator elektrisch angetrieben, wobei eine temperaturgesteuerte Aktivierung des Ventilators vorgesehen sein kann. Bei einem elektrischen Antrieb des Ventilators entfällt die Notwendigkeit, einen mechanischen Antrieb, beispielsweise einen Keilriemen, vorzusehen.

Es gibt nun verschiedene Möglichkeiten, die Lehre der vorliegenden Erfindung in vorteilhafter Weise auszugestalten und weiterzubilden. Dazu wird einerseits auf die Unteransprüche und andererseits auf die nachfolgende Erläuterung eines bevorzugten Ausführungsbeispiels der Erfindung verwiesen.

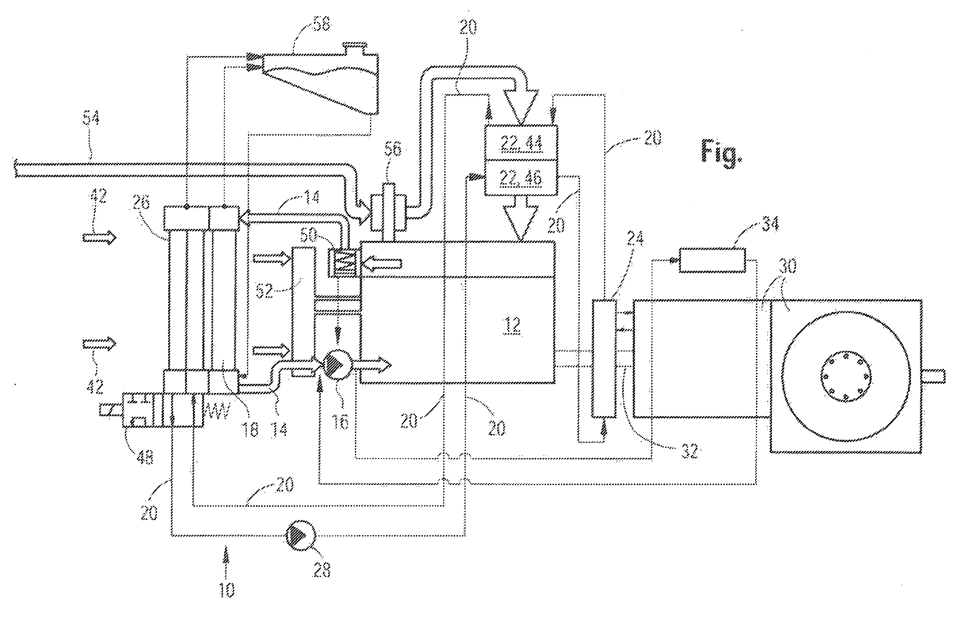

Die einzige Figur zeigt in einer schematischen Darstellung ein Ausführungsbeispiel eines erfindungsgemäßen Kühlsystems.

Das Kühlsystem 10 dient für ein Fahrzeug, welches im vorliegenden Fall nicht dargestellt ist. Bei dem Fahrzeug handelt es sich um ein landwirtschaftliches Nutzfahrzeug, insbesondere einen Traktor.

Das Fahrzeug umfasst eine Brennkraftmaschine 12, die an einen Hochtemperaturkreislauf 14 des Kühlsystems 10 angeschlossen ist, wobei das von der Brennkraftmaschine 12 erzeugte Drehmoment über eine Welle 32 an eine Getriebeeinheit 30 übertragen wird. Der Hochtemperaturkreislauf 14 umfasst eine Kühlmittelpumpe 16 und einen Kühler 18. Eine Heizungseinheit 34 zur Heizung einer nicht dargestellten Fahrzeugkabine ist an den Hochtemperaturkreislauf 14 angeschlossen. Weiterhin ist ein Niedrigtemperaturkreislauf 20 vorgesehen, welcher einen Ladeluftkühler 22, einen Ölkühler 24, einen Kühler 26 und eine Kühlmittelpumpe 28 aufweist.

Der Hochtemperaturkreislauf 14 und der Niedrigtemperaturkreislauf 20 sind voneinander getrennt ausgebildet, es findet also keine Vermischung des Kühlmittels der beiden Kühlkreisläufe 14 und 20 statt. Dementsprechend ist für jeden Kühlkreislauf 14 und 20 jeweils eine Kühlmittelpumpe 16 bzw. 28 vorgesehen.

Die Kühler 18 und 26 der Kühlmittelkreisläufe 14 und 20 sind jeweils als Luft-Kühlmittel-Wärmetauscher ausgebildet, welche von der aus der Umgebung kommenden Luft durchströmbar sind. Die Strömungsrichtung ist durch die Pfeile 42 angedeutet.

Der Niedrigtemperaturkreislauf 20 umfasst einen Kühler 26, eine Kühlmittelpumpe 28, einen ersten Teil 46 des Ladeluftkühlers 22, den Ölkühler 24 und einen zweiten Teil 44 des Ladeluftkühlers 22. Hierbei wird über die Kühlmittelpumpe 28 das vom Kühler 26 des Niedrigtemperaturkreislaufs 20 abgekühlte Kühlmittel zu dem ersten Teil 46 des Ladeluftkühlers 22 gefördert, welcher die Niedrigtemperaturstufe des Ladeluftkühlers 22 bildet. Das hierdurch erwärmte Kühlmittel durchläuft den Ölkühler 24 und danach die durch den zweiten Teil 44 des Ladeluftkühlers 22 gebildete Hochtemperaturstufe, um anschließend zum Kühler 26 zu gelangen.

Es ist ferner ein 4/2-Wegeventil 48 vorgesehen, mit welchem der Kühler 26 des Niedrigtemperaturkreislaufs 20 umgangen werden kann. Das ist dann der Fall, wenn der linke Teil des 4/2-Wegeventils sich in der aktiven Stellung befindet. In der dargestellten Stellung des 4/2-Wegeventils 48 ist der Kühler 26 mit dem Niedrigtemperaturkreislauf 20 verbunden. In gleicher Weise kann mit Hilfe des Thermostatventils 50 der Kühler 18 des Hochtemperaturkreislaufs 14 abgetrennt bzw. kurzgeschlossen werden. In diesem Fall, insbesondere nach einem Kaltstart des Fahrzeugs, erfolgt keine Kühlung der Brennkraftmaschine 12 durch den Kühler 18.

Die Kühler 26 und 18 sind räumlich hintereinander angeordnet und werden ihrer Anordnungsreihenfolge entsprechend von der aus der Umgebung kommenden Luft in Richtung der Pfeile 42 durchströmt. Hierzu wird die Luft von dem Ventilator 52 durch die Kühler 26 und 18 gesaugt.

Die aus der Umgebung angesaugte Verbrennungsluft 54 wird mit Hilfe des Turboladers 56 verdichtet und vom Ladeluftkühler 22 auf eine Temperatur von ungefähr 45 Grad Celsius heruntergekühlt. Der Kühlmittelbehälter 58 dient zum Befüllen und Entlüften des Hochtemperaturkreislaufs 14 und des Niedrigtemperaturkreislaufs 20.

## Patentansprüche

1. Kühlsystem für eine Brennkraftmaschine eines Fahrzeugs, vorzugsweise für ein landwirtschaftliches oder industrielles Nutzfahrzeug, insbesondere für einen Traktor, welches einen Hochtemperaturkreislauf (14) und einen Niedrigtemperaturkreislauf (20) aufweist, wobei der Hochtemperaturkreislauf (14) zur Kühlung der Brennkraftmaschine (12) vorgesehen ist und mindestens einen Kühler (18) aufweist, wobei der Niedrigtemperaturkreislauf (20) zur Kühlung eines Ladeluftkühlers (22) vorgesehen ist und mindestens einen Kühler (26) aufweist, und wobei der Ladeluftkühler (22) mindestens zweigeteilt oder zweistufig ausgebildet ist,
**dadurch gekennzeichnet,**
**dass** der Niedrigtemperaturkreislauf (20) ferner zur Kühlung eines Ölkühlers (24) vorgesehen ist, wobei das Kühlmittel des Niedrigtemperaturkreislaufs (20) nacheinander den Kühler (26), einen Teil (46) des Ladeluftkühlers (22), den Ölkühler (24) und einen weiteren Teil (44) des Ladeluftkühlers (22) durchströmt.

2. Kühlsystem nach Anspruch 1,
**dadurch gekennzeichnet,**
**dass** ein Mittel (48) vorgesehen ist, mit welchem das im Niedrigtemperaturkreislauf (20) beförderte Kühlmittel am Kühler (26) des Niedrigtemperaturkreislaufs (20) vorbeileitbar ist, so dass im Niedrigtemperaturkreislauf (20) lediglich der Ladeluftkühler (22) und der Ölkühler (24) miteinander wirkverbunden sind.

3. Kühlsystem nach einem der Ansprüche 1 oder 2,
**dadurch gekennzeichnet,**
**dass** die Kühlkreisläufe (14, 20) getrennt voneinander ausgebildet sind, so dass das den einen Kühlkreislauf (14) durchströmende Kühlmittel nicht mit dem den anderen Kühlkreislauf (20) durchströmenden Kühlmittel vermischt wird.

4. Kühlsystem nach einem der Ansprüche 1 bis 3,
**dadurch gekennzeichnet,**
**dass** jeder der Kühlkreisläufe (14, 20) jeweils eine Kühlmittelpumpe (16, 28) aufweist.

5. Kühlsystem nach einem der Ansprüche 1 bis 4,
**dadurch gekennzeichnet,**
**dass** einer der Kühler (18, 26) einen Luft-Kühlmittel-Wärmetauscher aufweist, welcher vorzugsweise von aus der Umgebung kommender Luft durchströmbar ist.

6. Kühlsystem nach einem der Ansprüche 1 bis 5,
**dadurch gekennzeichnet,**
**dass** der Ölkühler (24) zur Kühlung von Öl der Brennkraftmaschine (12) und/oder eines Getriebes (30) vorgesehen ist.

7. Kühlsystem nach einem der Ansprüche 1 bis 6,
**dadurch gekennzeichnet,**
**dass** der Ölkühler (24) in einer Aufwärmphase der Brennkraftmaschine (12) ausschließlich mit dem Hochtemperaturkreislauf (14) verbindbar ist.

8. Kühlsystem nach Anspruch 7,
**dadurch gekennzeichnet,**
**dass** der Kühler (18) des Hochtemperaturkreislaufs (14) vom Hochtemperaturkreislauf (14) abtrennbar ist.

9. Kühlsystem nach einem der Ansprüche 1 bis 8,
**dadurch gekennzeichnet,**
**dass** Leitungsverbindungen der Brennkraftmaschine (12), des Ladeluftkühlers (22), des Ölkühlers (24) und/oder mindestens eines der Kühler (18, 26) der Kühlkreisläufe (14, 20) mittels mindestens eines Ventils (48, 50) verbindbar und/oder unterbrechbar sind.

10. Kühlsystem nach Anspruch 9,
**dadurch gekennzeichnet,**
**dass** das mindestens eine Ventil (48, 50) einen Thermostaten aufweist und/oder elektrisch oder hydraulisch schaltbar ist.

11. Kühlsystem nach Anspruch 4 in Verbindung mit einem der Ansprüche 9 oder 10,
**dadurch gekennzeichnet,**
**dass** eine Steuereinrichtung und mindestens ein Temperatursensor zur Detektion der Temperatur des mindestens einen der beiden Kühlkreisläufe (14, 20) durchströmenden Kühlmittels vorgesehen ist, wobei der Temperatursensor Signale erzeugt, welche abhängig von der Temperatur des Kühlmittels sind, wobei diese Signale der Steuereinrichtung zuleitbar sind, und wobei das mindestens eine Ventil (48) und/oder eine der Kühlmittelpumpen (16, 28) von der Steuereinrichtung ansteuerbar ist.

12. Kühlsystem nach einem der Ansprüche 1 bis 11,
**dadurch gekennzeichnet,**
**dass** die Kühler (18, 26) der Kühlkreisläufe (14, 20) räumlich im Wesentlichen hintereinander angeordnet sind und ihrer Anordnungsreihenfolge entsprechend von Luft durchströmt werden, wobei die Luft vorzugsweise aus der Umgebung kommt.

13. Kühlsystem nach einem der Ansprüche 1 bis 12,
**dadurch gekennzeichnet,**
**dass** die Kühler (18, 26) der Kühlkreisläufe (14, 20) an unterschiedlichen Stellen im Fahrzeug angeordnet sind, wobei die durch die Kühler (18, 26) hindurchtretenden Luftströme vorzugsweise räumlich getrennt voneinander verlaufen.

14. Kühlsystem nach Anspruch 13,
**dadurch gekennzeichnet,**
**dass** den Kühlern (18, 26) jeweils ein Ventilator zugeordnet ist, wobei jeder der Ventilatoren Luft durch den ihm zugeordneten Kühler (18, 26) bewegt.

15. Kühlsystem nach Anspruch 14,
**dadurch gekennzeichnet,**
**dass** die Ventilatoren elektrisch angetrieben sind, wobei eine temperaturgesteuerte Aktivierung der Ventilatoren vorgesehen sein kann.

## Claims

1. Cooling system for an internal combustion engine of a vehicle, preferably for an agricultural or industrial utility vehicle, in particular for a tractor, which has a high-temperature circuit (14) and a low-temperature circuit (20), the high-temperature circuit (14) being provided for cooling the internal combustion engine (12) and having at least one cooler (18), the low-temperature circuit (20) being provided for cooling a charge-air cooler (22) and having at least one cooler (26), and the charge-air cooler (22) being of at least two-part or two-stage design, **characterized in that** the low-temperature circuit (20) is provided, furthermore, for cooling an oil cooler (24), the coolant of the low-temperature circuit (20) flowing successively through the cooler (26), one part (46) of the charge-air cooler (22), the oil cooler (24) and a further part (44) of the charge-air cooler (22).

2. Cooling system according to Claim 1, **characterized in that** a means (48) is provided by which the coolant transported in the low-temperature circuit (20) is conducted past the cooler (26) of the low-temperature circuit (20) so that, in the low-temperature circuit (20), only the charge-air cooler (22) and the oil cooler (24) are operatively connected to one another.

3. Cooling system according to either one of Claims 1 and 2, **characterized in that** the cooling circuits (14, 20) are designed to be separate from one another, so that the coolant flowing through one cooling circuit (14) is not mixed with the coolant flowing through the other cooling circuit (20).

4. Cooling system according to one of Claims 1 to 3, **characterized in that** each of the cooling circuits (14, 20) has in each case a coolant pump (16, 28).

5. Cooling system according to one of Claims 1 to 4, **characterized in that** one of the coolers (18, 26) has an air/coolant heat exchanger, through which preferably air coming from the surroundings is capable of flowing.

6. Cooling system according to one of Claims 1 to 5, **characterized in that** the oil cooler (24) is provided for cooling the oil of the internal combustion engine (12) and/or of a transmission (30).

7. Cooling system according to one of Claims 1 to 6, **characterized in that**, in a warm-up phase of the internal combustion engine (12), the oil cooler (24) is connectable solely to the high-temperature circuit (14).

8. Cooling system according to Claim 7, **characterized in that** the cooler (18) of the high-temperature circuit (14) is separable from the high-temperature circuit (14).

9. Cooling system according to one of Claims 1 to 8, **characterized in that** the line connections of the internal combustion engine (12), of the charge-air cooler (22), of the oil cooler (24) and/or of at least one of the coolers (18, 26) of the cooling circuits (14, 20) are connectable and/or interruptible by means of at least one valve (48, 50).

10. Cooling system according to Claim 9, **characterized in that** the at least one valve (48, 50) has a thermostat and/or is switchable electrically or hydraulically.

11. Cooling system according to Claim 4 in conjunction with either one of Claims 9 and 10, **characterized in that** a control device and at least one temperature sensor for detecting the temperature of the coolant flowing through at least one of the two cooling circuits (14, 20) are provided, the temperature sensor generating signals which are dependent on the temperature of the coolant, these signals being deliverable to the control device, with at least one valve (48) and/or one of the coolant pumps (16, 28) being activatable by the control device.

12. Cooling system according to one of Claims 1 to 11, **characterized in that** the coolers (18, 26) of the cooling circuits (14, 20) are arranged spatially essentially one behind the other and have air flowing through them correspondingly to the order of arrangement, the air preferably coming from the surroundings.

13. Cooling system according to one of Claims 1 to 12, **characterized in that** the coolers (18, 26) of the cooling circuits (14, 20) are arranged at different locations in the vehicle, the airstreams which pass through the coolers (18, 26) preferably running spatially separately from one another.

14. Cooling system according to Claim 13, **characterized in that** each of the coolers (18, 26) is assigned a fan, each of the fans moving air through the cooler (18, 26) assigned to it.

15. Cooling system according to Claim 14, **characterized in that** the fans are driven electrically, a temperature-controlled activation of the fans being capable of being provided.

## Revendications

1. Système de refroidissement pour un moteur à combustion interne de véhicule, de préférence pour un véhicule motorisé agricole ou industriel, notamment pour un tracteur comportant un circuit haute température (14) et un circuit basse température (20), le circuit haute température (14) étant prévu pour le refroidissement du moteur à combustion interne (12) et comportant au moins un refroidisseur (18), le circuit basse température (20) étant prévu pour le refroidissement d'un refroidisseur d'air de suralimentation (22) et comportant au moins un refroidisseur (26) et le refroidisseur d'air de suralimentation (22) étant réalisé au moins en deux parties ou en deux niveaux, **caractérisé en ce que** le circuit basse température (20) est prévu en outre pour le refroidissement d'un refroidisseur d'huile (24), l'agent de refroidissement du circuit basse température (20) traversant dans l'ordre le refroidisseur (26), une partie (46) du refroidisseur d'air de suralimentation (22), le refroidisseur d'huile (24) et une autre partie (44) du refroidisseur d'air de suralimentation (22).

2. Système de refroidissement selon la revendication 1, **caractérisé en ce qu'**un moyen (48) est prévu avec lequel l'agent de refroidissement transporté dans le circuit basse température (20) peut être amené au niveau du refroidisseur (26) du circuit basse température (20), de sorte que seuls le refroidisseur d'air de suralimentation (22) et le refroidisseur d'huile (24) sont reliés entre eux de façon efficace dans le circuit basse température (20).

3. Système de refroidissement selon l'une quelconque des revendications 1 ou 2, **caractérisé en ce que** les circuits de refroidissement (14, 20) sont séparés l'un de l'autre, de sorte que l'agent de refroidissement traversant le premier circuit de refroidissement (14) n'est pas mélangé à l'agent de refroidissement traversant l'autre circuit de refroidissement (20).

4. Système de refroidissement selon l'une quelconque des revendications 1 à 3, **caractérisé en ce que** chacun des circuits de refroidissement (14, 20) comporte respectivement une pompe d'agent de refroidissement (16, 28).

5. Système de refroidissement selon l'une quelconque des revendications 1 à 4, **caractérisé en ce qu'**un des refroidisseurs (18, 26) comporte un échangeur thermique air-agent de refroidissement qui peut être traversé de préférence par l'air provenant de l'environnement.

6. Système de refroidissement selon l'une quelconque des revendications 1 à 5, **caractérisé en ce que** le refroidisseur d'huile (24) est prévu pour le refroidissement de l'huile du moteur à combustion interne (12) et/ou d'une boîte de vitesses (30).

7. Système de refroidissement selon l'une quelconque des revendications 1 à 6, **caractérisé en ce que** le refroidisseur d'huile (24) peut être relié exclusivement au circuit haute température (14) pendant une phase de chauffage du moteur à combustion interne (12).

8. Système de refroidissement selon la revendication 7, **caractérisé en ce que** le refroidisseur (18) du circuit haute température (14) est séparé du circuit haute température (14).

9. Système de refroidissement selon l'une quelconque des revendications 1 à 8, **caractérisé en ce que** les jonctions de conduite du moteur à combustion interne (12), du refroidisseur d'air de suralimentation (22), du refroidisseur d'huile (24) et/ou d'au moins un des refroidisseurs (18, 26) des circuits de refroidissement (14, 20) peut être relié et/ou coupé à l'aide d'au moins une vanne (48, 50).

10. Système de refroidissement selon la revendication 9, **caractérisé en ce que** l'au moins une vanne (48, 50) comporte un thermostat et/ou peut être commutée électriquement ou hydrauliquement.

11. Système de refroidissement selon la revendication 4 conjointement avec une des revendications 9 ou 10, **caractérisé en ce qu'**un dispositif de commande et au moins un capteur de température est prévu pour la détection de la température d'au moins un agent de refroidissement traversant les deux circuits de refroidissement (14, 20), le capteur de température émettant des signaux différents en fonction de la température de l'agent de refroidissement, ces signaux pouvant être amenés au dispositif de commande et l'au moins une vanne (48) et/ou une pompe parmi les deux pompes d'agent de refroidissement (16, 28) pouvant être commandées par le dispositif de commande.

12. Système de refroidissement selon l'une quelconque des revendications 1 à 11, **caractérisé en ce que** les refroidisseurs (18, 26) des circuits de refroidissement (14, 20) sont disposés pour l'essentiel l'un après l'autre dans l'espace et que cette succession d'agencements est traversée de façon correspondante par de l'air, l'air provenant de préférence de l'environnement.

13. Système de refroidissement selon l'une quelconque des revendications 1 à 12, **caractérisé en ce que** les refroidisseurs (18, 26) des circuits de refroidissement (14, 20) sont disposés en différents endroits dans le véhicule, les flux d'air traversant les refroidisseurs (18, 26) étant de préférence séparés les uns des autres dans l'espace.

14. Système de refroidissement selon la revendication 13, **caractérisé en ce qu'**un portillon de vanne est associé respectivement aux refroidisseurs (18, 26), chacun des portillons de vanne déplaçant de l'air à travers le refroidisseur (18, 26) lui étant associé.

15. Système de refroidissement selon la revendication 14, **caractérisé en ce que** les portillons de vanne sont commandés de façon électrique, une activation des portillons de vanne commandée par la température pouvant être prévue.
